# EUROPÄISCHE PATENTANMELDUNG

(11) **EP 4 617 011 A1**
(43) Veröffentlichungstag der Anmeldung: **17.09.2025**
(21) Anmeldenummer: 25162611.5
(22) Anmeldetag: 10.03.2025
(51) Int. Cl.: B25J 15/00, B65G 47/91

(54) **HANDHABUNGSVORRICHTUNG ZUM HANDHABEN EINES STÜCKGUTS UND EIN VERFAHREN**

(30) Priorität: 11.03.2024 DE 102024106912
(71) Anmelder: Körber Supply Chain Logistics GmbH, 78467 Konstanz (DE)
(72) Erfinder: Schulze, Oliver, 88662 Überlingen (DE); Eisser, Dirk-Udo, 78479 Reinchenau (DE); Fischer, Marco, 78462 Konstanz (DE); Skrdlant, Rolf-Peter, 88662 Überlingen (DE); Huber, Richard, 78467 Konstanz (DE)
(74) Vertreter: Müller Schupfner & Partner Patent- und Rechtsanwaltspartnerschaft mbB (Muc)

(57) **Zusammenfassung**

Es wird eine Handhabungsvorrichtung (10) zum Aufnehmen von zumindest einem Stückgut bereitgestellt. Die Handhabungsvorrichtung (10) umfasst zumindest eine Greifvorrichtung (11), die dazu ausgestaltet ist, in einer Greifposition ein Stückgut zu greifen, wobei die Greifvorrichtung (11) eine Kontaktfläche (12) aufweist, mit der die Greifvorrichtung (11) während der Greifposition mit dem zumindest einen gegriffenen Stückgut in Kontakt ist, wobei die Greifvorrichtung (11) dazu ausgestaltet ist, basierend auf zumindest einer Stückguteigenschaft des zumindest einen zu greifenden Stückguts die Kontaktfläche (12) zu variieren. Ferner wird ein Verfahren zum Aufnehmen von zumindest einem Stückgut bereitgestellt.

## Beschreibung

Die Erfindung betrifft eine Handhabungsvorrichtung zum Aufnehmen von zumindest einem Stückgut und ein Verfahren.

Aus dem Stand der Technik sind verschiedene Vorrichtungen bekannt, um Stückgüter mit unterschiedlichen Eigenschaften, beispielsweise Paket- oder Postsendungen, aufzunehmen. Unter unterschiedlichen Eigenschaften sind beispielsweise Gewicht, Form, Abmessungen, Verformbarkeit, Härte, Material, Schwerpunkt etc. eines Stückguts zu verstehen. Diese unterschiedlichen Eigenschaften können zur Folge haben, dass nicht jedes Stückgut sich von ein und derselben Vorrichtung bzw. Maschine aufnehmen lässt bzw. gleich mittels einer maschinellen Manipulation bzw. einem maschinellen Vorgang handhaben lässt.

Bei bekannten Sortiersystemen sind mehrere verschiedene Vorrichtungen notwendig, um Stückgüter unterschiedlicher Größe und/oder Gewicht zu greifen. Beispielsweise können mit nur einem Sauggreifer kleinere Pakete präzise aufgenommen werden, ohne dass hierbei benachbarte Pakete unbeabsichtigt mitaufgenommen werden. Größere, schwerere Pakete können mit nur einem Sauggreifer jedoch nicht angehoben werden, sondern benötigen mehrere oder einen größeren Sauggreifer. Bei einer Greifvorrichtung mit mehreren und/oder größeren Sauggreifern können zwar größere, schwerere Pakete aufgenommen werden, allerdings ist es bei vielen, insbesondere kleineren, Sendungen, die nebeneinander liegen, nicht mehr ohne weiteres möglich, eine einzelne Sendung gezielt aus dem Strom aufzunehmen. In einem Stückgüterstrom bzw. einem Paketstrom mit unterschiedlichen Stückgütern bzw. Paketen kann daher nur ein Teil der Stückgüter bzw. Pakete durch eine solche Vorrichtung aufgenommen bzw. gehandhabt werden. Es kann eine manuelle Bearbeitungsstation, an der nicht bearbeitbare Stückgüter bzw. Pakete aussortiert werden, in Richtung des Stückgüterstroms bzw. Paketstroms nach der Vorrichtung angeordnet. Dies reduziert jedoch den Automationsgrad und verursacht zusätzliche Personalkosten. Alternativ können zwei oder mehrere Vorrichtungen hintereinandergeschaltet werden, die verschieden viele Sauggreifer aufweisen. Dies erhöht allerdings den Platzbedarf und führt zu hohen Installations-, Wartungs- und Betriebskosten.

Es ist somit Aufgabe der vorliegenden Erfindung, eine verbesserte Handhabungsvorrichtung bereitzustellen. Insbesondere ist es eine Aufgabe der vorliegenden Erfindung eine Handhabungsvorrichtung bereitzustellen, die eine große Bandbreite an unterschiedlichen Stückgütern problemlos und effizient handhaben kann.

Diese Aufgabe mit einer Handhabungsvorrichtung mit den Merkmalen des Anspruchs 1 und durch ein Verfahren mit den Merkmalen des Anspruchs 15 gelöst.

Gemäß einem Aspekt der vorliegenden Erfindung wir eine Handhabungsvorrichtung zum Aufnehmen von zumindest einem Stückgut bereitgestellt. Die Handhabungsvorrichtung kann zumindest eine Greifvorrichtung umfassen, die dazu ausgestaltet ist, in einer Greifposition ein Stückgut zu greifen. Die Greifvorrichtung kann eine Kontaktfläche aufweisen, mit der die Greifvorrichtung während der Greifposition mit dem zumindest einen gegriffenen Stückgut in Kontakt ist. Die Greifvorrichtung kann dazu ausgestaltet sein, basierend auf zumindest einer Stückguteigenschaft des zumindest einen zu greifenden Stückguts die Kontaktfläche zu variieren.

Gegenüber dem bekannten Stand der Technik liefert die vorliegende Erfindung den Vorteil, dass mit nur einer Handhabungsvorrichtung, beispielsweise einem Roboter, ein sehr breites Spektrum an Stückgütern, beispielsweise Paketen, mit verschiedenen Stückguteigenschaften gehandhabt werden kann. Die Stückgüter können in einem Stückgüterstrom bereitgestellt sein. In diesem Fall bietet die vorliegenden Erfindung den Vorteil, dass durch Variation der Kontaktfläche genau das zu greifenden Stückgut (im Folgenden auch als Zielstückgut bezeichnet) gehandhabt werden kann, ohne dass angrenzende Stückgüter ungewollt beeinflusst werden. Damit kann die Handhabungsvorrichtung ein Zielstückgut auch gezielt aus einer Vielzahl von Stückgütern herausgreifen. Folglich kann die Handhabungsvorrichtung einen sehr breiten Einsatzbereich aufweisen.

Die Handhabungsvorrichtung kann eine Vorrichtung sein, die eine Stückgut von einer ersten Position zu einer zweiten Position bewegen kann. Mit anderen Worten kann die Handhabungsvorrichtung ein Stückgut physisch bewegen. Die Handhabungsvorrichtung kann beispielsweise ein Roboter mit einem beweglichen Arm sein. Die Handhabungsvorrichtung kann beispielsweise einen SCARA-Roboter mit vier Achsen und vier Freiheitsgraden umfassen. Sämtliche Achsen können als serielle Kinematik ausgeführt sein, d. h. der Koordinatenursprung der folgenden Achse ist abhängig von der Position der vorhergehenden. Dieser Robotertyp eignet sich auf Grund seiner schnellen und wiederholgenauen Bewegung besonders gut für sogenannte Pick-and-Place-Anwendungen, bei der ein Stückgut von einer ersten Position zu einer zweiten Position bewegt werden kann. Alternativ sind auch 5- oder 6-Achs-Roboter möglich. Andere Handhabungsvorrichtungen, beispielsweise auf Rollen oder auf Schienen geführte Handhabungsvorrichtungen, sind ebenfalls denkbar. Anders gesagt kann unter der Handhabungsvorrichtung jede Vorrichtung verstanden werden, die dazu konfiguriert ist, ein Stückgut zu bewegen. Insbesondere kann ein Bewegen eine Richtungsänderung, eine Beschleunigung, ein Greifvorgang, ein Aufnehmen, ein Halten, ein Loslassen, ein Transport und/oder ein Verschieben eines Stückgutes umfassen. Insbesondere kann unter dem Begriff Bewegen auch ein Manipulieren verstanden werden. Dabei kann eine Aktion durchgeführt werden, die eine translatorische und/oder rotatorische Bewegung des Stückguts umfasst. Darunter kann insbesondere ein physisches Manipulieren eines Stückguts verstanden werden.

Die Handhabungsvorrichtung kann eine Greifvorrichtung umfassen. Die Greiferrichtung kann dazu ausgebildet sein, ein Stückgut zu greifen, zu halten und wieder loszulassen. Die Greifvorrichtung kann beispielsweise ein Sauggreifer sein bzw. einen Sauggreifer umfassen. Alternativ oder zusätzlich kann die Greifvorrichtung einen mechanischen Greifer, beispielsweise einen Zangengreifer, umfassen. Weitere Arten von Greifvorrichtungen sind ebenfalls möglich. Beispielsweise kann die Handhabungsvorrichtung einen SCARA-Roboter (Selective Compliance Assembly Robot Arm) umfassen. Ein solcher Roboter kann auch als horizontaler Gelenkarmroboter bezeichnet werden.

Die Handhabungsvorrichtung kann dazu ausgebildet sein, ein Stückgut mit Stückguteigenschaften mit der Greifvorrichtung aufzunehmen (z.B. zu greifen). Dabei kann die Kontaktfläche der Greifvorrichtung in Abhängigkeit der Stückguteigenschaften des zu greifenden Stückguts variabel bzw. veränderbar sein. Anders gesagt kann die Kontaktfläche der Greifvorrichtung an ein zu greifendes Stückgut anpassbar sein. Mit anderen Worten kann die Kontaktfläche der Greifvorrichtung für verschiedene Stückgüter bzw. verschiedene Gruppen von Stückgütern (z.B. mit unterschiedlichen Stückguteigenschaften) in Abhängigkeit der Stückguteigenschaften angepasst werden. Die Kontaktfläche kann durch Greifvorrichtung aktiv variiert werden. Mit anderen Worten kann die Greifvorrichtung zumindest ein Element aufweisen, welches die Kontaktfläche aktiv variieren kann. Zusätzlich kann sich die Kontaktfläche auch passiv verändern, beispielsweise wenn die Greifvorrichtung ein elastisches Element aufweist, das mit einem Stückgut in Kontakt kommt und sich dabei verformt. In einer bevorzugten Ausführungsform der vorliegenden Erfindung, ist eine solche passive Variation der Kontaktfläche nicht unter einer Variation der Kontaktfläche basierend auf Stückguteigenschaft des zumindest einen zu greifenden Stückguts gemeint.

Die Kontaktfläche der Greifvorrichtung kann eine Fläche sein, die mit einem gegriffenen Stückgut in Kontakt kommt. Die Kontaktfläche kann die Kontaktfläche zwischen Handhabungsvorrichtung und Stückgut sein. Die Kontaktfläche kann eine integrale Fläche sein oder eine aus mehreren Unterkontaktflächen zusammengesetzte Kontaktfläche. Mit anderen Worten kann die Kontaktfläche mehrere einzelne Flächen umfassen, die voneinander getrennt sind. Die Kontaktfläche kann verschiedene Konturen aufweisen. Die Kontaktfläche kann eine kreisförmige oder polygonale Kontur aufweisen. Beispielsweise kann die Kontaktfläche durch einen Sauggreifer, der als Greifvorrichtung eingesetzte ist, definiert sein. In diesem Fall kann die Kontaktfläche eine kreisrunde Kontur aufweisen. Bei einer mechanischen Greifvorrichtung wie beispielsweise einer Zange, kann die Kontaktfläche die Summe aller Berührungsflächen zwischen Greifvorrichtung und Stückgut aufweisen.

Unter einem Stückgut kann ein transportables Gut oder Objekt, insbesondere ein Paket, Päckchen Versandtasche, Small, Umschlag usw., verstanden werden. Insbesondere können Poststücke oder Postsendungen unter Stückgüter verstanden werden. Unterschiedliche Stückgüter können unterschiedliche Stückguteigenschaften aufweisen. Die Stückguteigenschaft kann beispielsweise indikativ für eine Beschaffenheiten des Stückguts sein. Das Stückgut kann im Wesentlichen symmetrisch oder asymmetrisch geformt sein. Des Weiteren können die Stückgüter jeweils unterschiedliche Massen aufweisen. Beispielsweise ist ein Stückgut ein Paket aus einem Kartonmaterial, beispielsweise Pappe, mit Inhalt. Es sind eine Vielzahl von Ausgestaltungen der Stückgüter denkbar weswegen es auch eine Vielzahl von unterschiedlichen Stückguteigenschaften geben kann. Ferner kann das Stückgut ein Paket oder Päckchen aus einem Folienmaterial sein. Die Greifposition kann eine Position sein, in der die Greifvorrichtung mit dem Stückgut in physischem Kontakt steht. Die Kontaktfläche kann beispielsweise variiert werden, indem sie vergrößert oder verkleinert wird. Eine größere Kontaktfläche kann eine größere Kraft übertragen. Somit kann beispielsweise bei Vorliegen eines schweren Stückguts die Kontaktfläche so vergrößert werden, dass das Stückgut sicher an der Greifvorrichtung gehalten werden kann. Bei einem besonders kleinen Stückgut (hinsichtlich seiner Dimensionen) kann die Kontaktfläche beispielsweise verkleinert werden, um das Stückgut problemlos aus einem Stückgutstrom herauszuheben, ohne andere angrenzende Stückgüter zu beeinflussen.

Die Handhabungsvorrichtung kann beispielsweise in einem System verwendet werden, das dazu vorgesehen ist, Stückgüter zu transportieren und/oder zu sortieren. Beispielsweise können mehrere Stückgüter in einem Stückgüterstrom auf einem Förderband bewegt werden. Es ist des Weiteren denkbar, dass die Greifvorrichtung der Handhabungsvorrichtung, einen Greifer, insbesondere einen Vakuum-Sauggreifer umfasst, um Stückgüter zu handhaben. Die Handhabungsvorrichtung kann beispielsweise dazu verwendet werden, einzelne Stückgüter aus einem Stückgüterstrom zu entnehmen.

Vorzugsweise ist die Greifvorrichtung dazu ausgestaltet, basierend auf zumindest einer Stückguteigenschaft des zumindest einen zu greifenden Stückguts die Kontaktfläche in ihrer Größe und/oder Ausrichtung im Raum zu variieren. Die Variation der Größe der Kontaktfläche kann beispielsweise dadurch realisiert sein, dass die Greifvorrichtung sich anpasst. Hierbei kann ein Greifelement so angepasst werden, dass sich die Kontaktfläche erhöht. Zusätzlich oder alternativ kann ein weiteres Greifelement der Greifvorrichtung genutzt werden, um die Kontaktfläche zu bilden. Somit kann auf einfache Art und Weise die Größe der Kontaktfläche variiert werden. Ferner kann die Greifvorrichtung dazu ausgestaltet sein, eine Orientierung eines gegriffenen Stückguts im Raum anzupassen. Dazu kann die Greifvorrichtung zumindest ein Gelenk oder beweglichen Abschnitt aufweisen. Somit kann die Greifvorrichtung die Kontaktfläche beispielsweise Kippen oder drehen. Dadurch ist es möglich ein Stückgut so zu greifen und zu halten, dass eine minimale Kraft auf die Greifvorrichtung wirkt. Mit anderen Worten kann eine Anpassung an den Schwerpunkt des Stückguts erfolgen. Ferner kann durch eine Drehen und/oder Schwenken der Kontaktfläche vermieden werden, dass ein gegriffenes Stückgut mit anderen Stückgütern kollidiert. Insgesamt kann somit ein Betrieb der Handhabungsvorrichtung verbessert und in seiner Effizienz gesteigert werden. Ferner kann die Kontaktfläche vor einem Greifen eines Stückguts an eine Oberfläche des Stückguts angepasst werden. Damit kann ein sicherer Greifvorgang realisiert werden. SO kann es beispielsweise vorkommen, dass ein Stückgut eine schräge Oberfläche aufweist, an welcher das Stückgut gegriffen werden soll. Wird die Kontaktfläche nun bereits vor dem tatsächlichen Greifen entsprechend der schrägen Oberfläche geneigt, kann der Greifvorgang einfacher und schneller von statten gehen. Hierbei ist zu beachten, dass die Kontaktfläche der Greifvorrichtung auch vorhanden ist, wenn kein Stückgut gegriffen ist. In diesem Fall ist die Kontaktfläche eine theoretische Kontaktfläche zwischen Greifvorrichtung und Stückgut.

Die Greifvorrichtung kann zumindest ein Greifelement umfassen, das dazu vorgesehen ist, mit dem zu greifenden Stückgut in Kontakt gebracht zu werden, um das Stückgut zu greifen und/oder zu halten. Die Größe der Kontaktfläche kann beispielsweise dadurch variiert werden, dass mehrere Greifelemente der Greifvorrichtung zusätzlich aktiviert oder deaktiviert werden. Ein aktiviertes Greifelement ist in einer Position angeordnet bzw. ausgerichtet, um mit einem zu greifenden Stückgut zu interagieren. Ein deaktiviertes Greifelement ist in einer Position angeordnet oder ausgerichtet, um nicht mit einem Stückgut zu interagieren. Das bedeutet, dass die Anzahl der aktiven Greifelemente der Greifvorrichtung erhöht oder verringert wird. Alternativ oder zusätzlich kann ein aktives Greifelement, das nicht für ein Stückgut mit bestimmten Stückguteigenschaften geeignet ist, gegen ein anderes mit Blick auf die Stückguteigenschaften angepasstes Greifelement ausgetauscht werden. Ferner ist es denkbar, dass die Greifvorrichtung mit einer weiteren Greifvorrichtung ausgetauscht wird. Beispielsweise kann eine erste Greifvorrichtung für ein erstes Stückgut und eine zweite Greifvorrichtung für ein zweites Stückgut jeweils nach Bedarf abwechselnd verwendet werden. Dabei sind die erste Greifvorrichtung und die zweite Greifvorrichtung Teil der Handhabungsvorrichtung bzw. an der Handhabungsvorrichtung angeordnet. Die erste Greifvorrichtung weist beispielsweise eine kleinere Kontaktfläche als die zweite Greifvorrichtung auf. Beispielsweise weist die erste Greifvorrichtung weniger und/oder kleinere Greifelemente auf als die zweite Greifvorrichtung. Es ist möglich, dass ein Greifelement für mehrere Stückgüter mit unterschiedlichen Stückguteigenschaften geeignet ist.

Vorzugsweise umfasst die Stückguteigenschaft eine Dimensionierung des zu greifenden Stückguts, eine Oberflächenbeschaffenheit des zu greifenden Stückguts, ein Gewicht des zu greifenden Stückguts, einen Massenschwerpunkt des zu greifenden Stückguts und/oder eine Platzierung des zu greifenden Stückguts relativ zu anderen Stückgütern. Damit kann die Greifvorrichtung ein zu greifendes Stückgut genauso greifen, dass das Stückgut problemlos gehandhabt werden kann. Mit anderen Worten kann die variable Kontaktfläche an das zu greifende Stückgut angepasst werden. Es ist möglich, dass der Massenschwerpunkt mittels der Dimensionierung und des Gewichts des zu greifenden Stückguts ermittelt wird. Die Ermittlung des Schwerpunkts kann in Verbindung mit einem optischen Analysesystem bzw. optischen Sensoren erfolgen. Die Dimensionierung des Stückgut kann dabei indikativ für eine Abmessung des Stückguts im Raum sein. Die Oberflächenbeschaffenheit kann indikativ dafür sein, wie ein Stückgut zu greifen ist. So kann eine Stückgut mit einer Oberfläche aus Folie andere Greifeigenschaften aufweisen als ein Stückgut mit einer Kartonoberfläche. Abhängig davon kann eine unterschiedliche Kontaktfläche für das eine Material besser geeignet sein als für das andere Material. Das Gewicht des Stückguts kann indikativ für eine Masse des Stückguts sein. Der Schwerpunkt kann indikativ für einen Masseschwerpunkt des Stückguts sein. So kann es beispielsweise durch ein Inhalt des Stückguts zu einem Masseschwerpunkt kommen, der nicht dem geometrischen Schwerpunkt des Stückguts entspricht. In einem solchen Fall kann es zu erheblichen Momenten bei einem Greifprozess kommen, so dass eine Variation der Kontaktfläche dennoch ein Sicheres Halten des Stückguts sicherstellen kann. Die Platzierung des Stückguts relativ zu anderen Stückgütern kann eine Position des Zielstückguts in einem Stückgutstrom angeben. Mit anderen Worten kann mit dieser Information bestimmt werden, wie gut das Zielstückgut zu greifen ist, ohne dass angrenzende bzw. benachbarte Stückgüter beeinflusst werden.

Vorzugsweise ist die Handhabungsvorrichtung dazu ausgestaltet, die zumindest eine Stückguteigenschaft zu erlangen oder zu erfassen. Beispielsweise kann eine Stückguteigenschaft mittels zumindest eines Sensors erfasst werden. Alternativ kann eine Stückguteigenschaft aus einer Datenbank oder von einer anderen Handhabungsvorrichtung erlangt werden. Die erlangten bzw. erfassten Stückguteigenschaften können mithilfe einer Steuereinheit verarbeitet werden. Die Steuereinheit kann eine computerähnliche Vorrichtung sein, die dazu ausgestaltet ist, Informationen aufzunehmen (Eingangsdaten), die Informationen zu verarbeiten und Informationen auszugeben (Ausgangsdaten). So kann die Steuereinheit beispielsweise Stückgutinformationen als Eingangsdaten aufnehmen und Handhabungsbefehle zur Steuerung der Handhabungsvorrichtung (Ausgangsdaten) ausgeben. Insbesondere können die erlangten bzw. erfassten Stückguteigenschaften zum Anpassen bzw. Einstellen der Kontaktfläche der Greifvorrichtung verwendet werden. Beispielsweise kann für eine Stückguteigenschaften und/oder eine Kombination verschiedener Stückguteigenschaften eines zu greifenden Stückguts eine vordefinierte Kontaktfläche in einer Datenbank hinterlegt sein, die durch die Steuereinheit abgerufen werden kann. Die Steuereinheit kann die Handhabungsvorrichtung dann so steuern (z.B. die Greifvorrichtung), dass die Kontaktfläche entsprechend den Stückguteigenschaften des zu greifenden Stückguts eingestellt (d.h. variiert) wird.

Vorzugsweise weist die Handhabungsvorrichtung ein Vision-System auf, um die zumindest eine Stückguteigenschaft zu erfassen. Mit anderen Worten kann die Handhabungsvorrichtung zumindest einen optischen Sensor, beispielsweise eine Kamera, umfassen, um Stückguteigenschaften des zu greifenden Stückguts zu ermitteln. Ferner kann eine Position anderer Stückgüter erfasst werden, um zu ermitteln wie das zu greifende Stückgut gegriffen werden kann. Der zumindest eine optische Sensor kann integral mit der Handhabungsvorrichtung ausgebildet sein bzw. an der Handhabungsvorrichtung angeordnet sein. Alternativ oder zusätzlich kann die Handhabungsvorrichtung mit zumindest einem optischen Sensor verbunden sein. Der zumindest eine Sensor kann dazu ausgestaltet sein, Informationen für eine Steuerung der Handhabungsvorrichtung zu liefern. Damit kann ein bereits an der Handhabungsvorrichtung vorgesehener Sensor genutzt werden, um die Stückguteigenschaften zu erlangen.

Vorzugsweise ist die Handhabungsvorrichtung dazu ausgestaltet, die Kontaktfläche individuell für jedes Stückgut zu bestimmen. Mit anderen Worten kann die Kontaktfläche der Greifvorrichtung für beliebig viele nacheinander zu handhabende Stückgüter angepasst werden. Beispielsweise kann die Kontaktfläche für ein erstes Stückgut kleiner sein als für ein zweites Stückgut, das beispielsweise schwerer ist als das erste Stückgut. Die Stückguteigenschaft des zweiten Stückguts kann beispielsweise an die Steuereinheit der Handhabungsvorrichtung übermittelt oder von der Steuereinheit der Handhabungsvorrichtung abgerufen werden. Anschließend kann die Kontaktfläche der Greifvorrichtung an das zweite Stückgut angepasst werden. Dieser Vorgang kann beliebig oft für beliebig viele Stückgüter mit unterschiedlichen Stückguteigenschaften wiederholt werden.

Vorzugsweise ist die Handhabungsvorrichtung dazu ausgestaltet, dass zumindest eine Stückgut an eine andere Position zu bewegen. Insbesondere kann die Handhabungsvorrichtung dazu ausgestaltet sein, das zu greifende Stückgut von einer ersten Position zu einer zweiten Position zu bewegen. Dazu nimmt die Handhabungsvorrichtung das zumindest eine Stückgut an der Greifposition mit der Greifvorrichtung auf, so dass das zumindest eine Stückgut in der Greifvorrichtung gehalten ist. Anschließend kann das zumindest eine Stückgut von der Handhabungsvorrichtung von der Greifposition zu einer Endposition überführt werden. In der Endposition kann die Greifvorrichtung das Stückgut loslassen bzw. platzieren.

Vorzugsweise weist die Handhabungsvorrichtung eine Parallelogrammführung auf, um die Greifvorrichtung im Raum zu verlagern. Unter der Parallelogrammführung kann ein Mechanismus verstanden werden, mit welchem ein an einem Doppel-Arm gehaltenes Stückgut während einer Bewegung der Greifvorrichtung im ursprünglichen Winkel in der Ebene senkrecht zur Drehachse gehalten wird. Damit kann eine gleichmäßige Verlagerung des Stückguts realisiert sein. Dies ist besonders bei zerbrechlichen Stückgütern vorteilhaft.

Vorzugsweise ist die Handhabungsvorrichtung dazu ausgestaltet, die Greifvorrichtung zu rotieren. Dadurch ist es möglich, das zumindest eine Stückgut entlang einer Kreisbahn bewegt wird. Mit anderen Worten kann auf diese Art und Weise das zumindest eine Stückgut um eine Drehachse bewegt werden. Dadurch ist es möglich, das Stückgut, wenn es von der Greifvorrichtung gehalten ist, auszurichten, beispielweise um das Stückgut besser halten und/oder platzieren zu können.

Vorzugsweise weist die Handhabungsvorrichtung einen Linearantrieb auf, um die Greifvorrichtung im Raum zu verlagern. Der Linearantrieb kann vorzugsweise ein elektrischer Linearantrieb sein. Der Linearantrieb ist besonders dazu geeignet, das zumindest eine Stückgut geradlinig bzw. entlang einer Achse zu bewegen. Beispielsweise kann durch den Linearantrieb die Greifvorrichtung in Richtung des Stückguts bewegt werden, um das Stückgut zu greifen. Anschließend kann nach dem Greifen des Stückguts mit der Greifvorrichtung das Stückgut durch den Linearantrieb angehoben werden, um das Stückgut von der Greifposition zu der Endposition zu bewegen bzw. zu verlagern.

Vorzugsweise weist die Handhabungsvorrichtung zumindest einen Förderer auf, der dazu ausgestaltet ist, Stückgüter in einen Greifbereich der Greifvorrichtung zu bringen. Der Förderer kann Stückgüter in einer Förderrichtung fördern. Der Förderer kann ein Förderband oder Fördererrollen umfassen. Erreicht ein Stückgut eine Greifposition, kann die Handhabungsvorrichtung das Stückgut von dem Förderer mithilfe der Greifvorrichtung handhaben. Der Förderer kann eine oder mehrere Rollenzeilen umfassen. Die Rollenzeilen können beispielsweise Stückgüter auf ein Förderband einschleusen bzw. in verschiedene Stückgüterströme aufteilen. Es ist somit vorteilhaft, die Rollenzeilen in Betriebsrichtung nach einem Singulator anzuordnen. Genauer gesagt werden die Rollenzeilen vorteilhafterweise für die Aufteilung eines Stückgüterstroms nach dem Singulator verwendet. Der Förderer kann ein Gurtförderband umfassen. Gurtförderbänder sind vorteilhaft, um große Volumenströme von Stückgütern zu transportieren. Beispielsweise müssen Gurtförderer im System so ausgelegt sein, dass diese die unterschiedlichsten Transportlasten bei gleichzeitig hoher Verfügbarkeit und Zuverlässigkeit verarbeiten können. Gurtförderer können Stückgüter mit hoher Frequenz und kurzen Beschleunigungs- und Bremswegen präzise positionieren und sortieren. Alternativ oder zusätzlich kann der Förderer eine Rutsche umfassen, auf der die Stückgüter zu der Greifposition transportiert werden.

Vorzugsweise weist die Greifvorrichtung zumindest ein Greifelement, vorzugsweise eine Vielzahl von Greifelementen, auf. Das zumindest eine Greifelement kann ein Sauggreifer sein. Der Sauggreifer kann einen Saugnapf aufweisen. Das zumindest eine Greifelement kann die variable Kontaktfläche der Greifvorrichtung aufweisen. Anders gesagt definieren die Greifelemente die variable Kontaktfläche. Das bedeutet, dass die variable Kontaktfläche Teil des Greifelements sein kann. Bei einem mechanischem Zangengreifer können beispielsweise Zangen den Greifelementen entsprechen.

Vorzugsweise sind die Greifelemente relativ zueinander verlagerbar. Das bedeutet, dass die Greifelemente zueinander beweglich ausgebildet sind. Mit anderen Worten können eine Vielzahl von Greifelementen an der Greifvorrichtung vorgesehen sein (d.h. mehr als ein Greifelement). Die Greifelemente können relativ zueinander beweglich sein. Beispielsweise sind die Greifelemente aufeinander zu und voneinander weg beweglich angeordnet. Die Greifelemente können durch eine Schwenkbewegung und/oder durch eine lineare bzw. geradlinige Bewegung relativ zueinander verlagerbar sein. Die Greifelemente können Rückstellelemente aufweisen, die die Greifelemente mit einer Kraft beaufschlagen, um die Greifelemente von einer Schließposition in eine Offenposition zu überführen.

Vorzugsweise weist die Greifvorrichtung zumindest ein Anschlusselement auf, an das jeweils zumindest ein Greifelement angebracht oder anbringbar ist, wobei das zumindest eine Greifelement die Kontaktfläche definiert. Mit anderen Worten bildet das Anschlusselement eine Schnittstelle zwischen der Greifvorrichtung und den Greifelementen. Das Anschlusselement weist vorzugsweise eine Verbindungsgeometrie auf, die mit einer weiteren Verbindungsgeometrie des Greifelements korrespondiert. Beispielsweise kann das Anschlusselement und das Greifelement eine Steckverbindung und/oder Schraubverbindung umfassen. Das Anschlusselement kann vorzugsweise derart ausgebildet sein, dass das Anschlusselement mit mehreren unterschiedlichen Greifelementen verbunden werden kann. Anders gesagt ist das Anschlusselement vorzugsweise mit mehreren Greifelementen, die insbesondere unterschiedliche Kontaktflächen aufweisen, kompatibel.

Vorzugsweise ist das zumindest eine Anschlusselement so ausgestaltet, dass darüber ein Unterdruck an ein daran angeschlossenes Greifelement weitergeleitet werden kann. Dafür kann das Anschlusselement eine Durchgangsöffnung bzw. ein Ventil umfassen. Insbesondere kann das Anschlusselement fluiddicht, insbesondere luftdicht, mit dem zumindest einen Greifelement lösbar verbindbar sein. Hierzu ist das Greifelement vorzugsweise als Saugelement bzw. Saugnapf ausgebildet. Ein solchen Anschlusselement ist insbesondere vorteilhaft, um mit einem Sauggreifer verwendet zu werden bzw. um an einem Sauggreifer angeordnet zu sein.

Vorzugsweise ist die Greifvorrichtung dazu ausgestaltet, zumindest zwei Stückgüter in der Greifposition gleichzeitig zu greifen. Beispielsweise, kann die Greifvorrichtung mehrere Greifelemente aufweisen, die dazu vorgesehen sind, zumindest zwei Stückgüter gleichzeitig aufzunehmen bzw. zu greifen. Die Stückgüter können dazu bereits in der Greifposition korrespondierend zu den Greifelementen der Greifvorrichtung angeordnet sein. Insbesondere können die Greifpositionen der zumindest zwei Stückgüter vorbestimmt sein, damit die zumindest zwei Stückgüter gleichzeitig von der Handhabungsvorrichtung, insbesondere der Greifvorrichtung, aufgenommen werden können. Es ist denkbar, dass die Handhabungsvorrichtung zwei Greifvorrichtungen umfasst, um zwei Stückgüter gleichzeitig oder kurz nacheinander zu greifen.

Vorzugsweise ist die Kontaktfläche ausschließlich durch ein einzelnes Greifelement definiert oder ist die Kontaktfläche durch mehrere Greifelemente definiert. Die Greifvorrichtung kann folglich ein einzelnes Greifelement oder mehrere Greifelemente umfassen. Die gesamte Kontaktfläche der Greifvorrichtung setzt sich aus der Summe der Kontaktflächen der einzelnen Greifelemente zusammen. Beispielsweise kann die Greifvorrichtung einen Sauggreifer umfassen mit einem einzelnen Greifelement. Der Kontaktbereich des Sauggreifers entspricht im Wesentlichen einem Ansaugbereich bzw. einer Fläche des Saugnapfs. Alternativ kann das Greifelement mehrere Greifelemente aufweisen, die nebeneinander bzw. aneinander angrenzend angeordnet sind. Eine größere Kontaktfläche, insbesondere eine größere Ansaugfläche ermöglicht es, schwere Stückgüter sich zu greifen und zu handhaben.

Vorzugsweise sind die Greifelemente unterschiedlich ausgebildet, insbesondere weisen die Greifelemente eine unterschiedliche Geometrie auf. Es ist möglich, dass die Greifelemente unterschiedliche Größen aufweisen. Dadurch kann in Abhängigkeit der Stückguteigenschaften eines Stückguts die Kontaktfläche der Greifvorrichtung genauer angepasst werden. Beispielsweise können auf diese Art und Weise mehrere kleinere Greifelemente oder ein einzelnes größeres Greifelemente aktiviert werden. Dadurch kann die Greifvorrichtung an das Gewicht und die Größe des zu greifenden Stückguts angepasst werden.

Vorzugsweise ist das zumindest eine Greifelement reversibel an dem zumindest einen Anschlusselement anbringbar. Anders gesagt kann das Greifelement lösbar mit dem Anschlusselement verbindbar sein. Insbesondere kann das Greifelement kraft- und/oder formschlüssig mit dem Anschlusselement verbindbar sein. Das Anschlusselement und das zumindest eine Greifelement können beide jeweils derart ausgestaltet sein, dass eine kraft- und/oder formschlüssige Verbindung zwischen dem Anschlusselement und dem zumindest einen Greifelement möglich ist. Beispielsweise können die Greifelemente und die Anschlusselemente mittels einer Rastverbindung, einer Bajonett-Verbindung und/oder einer Schraubverbindung miteinander lösbar verbunden sein.

Vorzugsweise weist die Greifvorrichtung ein Magazin auf, in dem eine Vielzahl von Greifelementen vorgesehen ist, wobei die Greifvorrichtung so ausgestaltet ist, dass unterschiedliche Greifelemente daran montierbar sind. Die Greifvorrichtung kann dazu ausgestaltet sein, unterschiedliche Greifelemente aufzunehmen, um damit Stückgüter zu handhaben. So kann das für ein bestimmtes zu greifendes Stückgut in Abhängigkeit von dessen Stückguteigenschaften passende Greifelement ausgewählt und an der Greifvorrichtung angebracht werden. Die Greifelemente können somit austauschbar an der Greifvorrichtung montierbar sein. Die Montage der Greifelemente erfolgt vorzugsweise selbsttätig.

Vorzugsweise ist das Magazin als ein Revolvermechanismus ausgestaltet. Das bedeutet, dass die Greifelemente, vorzugsweise unterschiedliche Greifelemente, auf einer Kreislinie angeordnet und um eine gemeinsame Rotationsachse rotierbar sind. Durch ein Rotieren der Greifelemente um die Rotationsachse kann ein Greifelement oder mehrere Greifelemente der Greifvorrichtung ausgetauscht werden. Durch den Revolvermechanismus können beispielsweise die einzelnen Greifelemente mit dem Anschlusselement gekoppelt bzw. verbunden werden.

Vorzugsweise weist die Greifvorrichtung einen Wechselmechanismus auf, bei dem abhängig von der Position des Wechselmechanismus ein Greifelement so positioniert ist, dass es mit einem zu greifenden Stückgut in Kontakt kommen kann. Anders gesagt kann der Wechselmechanismus Teil der Greifvorrichtung sein. Das Greifelement der Greifvorrichtung kann durch den Wechselmechanismus in Abhängigkeit der Stückguteigenschaft des zu greifenden Stückguts ausgetauscht werden. Der Wechselmechanismus kann aus mehreren verschiedenen Greifelementen auswählen und diese in eine Position bringen, um ein zu greifendes Stückgut zu greifen. Beispielsweise kann die Wechselvorrichtung einen Dreh- bzw. einen Revolvermechanismus umfassen, an dem entlang einer Umfangrichtung mehrere Greifelemente mit unterschiedlichen Kontaktflächen angeordnet sind. Durch rotieren des Wechselmechanismus um eine Rotationsachse kann ein gewünschtes Greifelement in eine Position gebracht werden, um ein zu greifendes Stückgut zu greifen. Insbesondere kann der Winkel des Greifelements durch eine Rotation des Wechselmechanismus eingestellt werden.

Vorzugsweise kann eine Wechselvorrichtung von der Handhabungsvorrichtung getrennt angeordnet sein. Die Wechselvorrichtung kann mehrere Greifelemente umfassen. Die Wechselvorrichtung kann als Magazin ausgebildet sein bzw. ein Magazin umfassen, aus dem die Handhabungsvorrichtung das gewünschte Greifelement automatisch auswählt und an der Greifvorrichtung anordnet bzw. montiert. Alternativ kann die Wechselvorrichtung einen Revolvermechanismus umfassen, der das mit der Handhabungsvorrichtung zu verbindende Greifelement durch Drehung um eine Drehachse in Position bringt.

Vorzugsweise weist die Greifvorrichtung einen Klappmechanismus auf, wodurch die Anzahl von Greifelementen, welche in der Greifposition angeordnet sind, verändert werden kann. So kann durch eine Schwenkbewegung beispielsweise zusätzlich Greifelemente für die Aufnahme eines zu greifenden Stückguts bereitgestellt werden bzw. in Position gebracht werden. Der Klappmechanismus kann beispielsweise angrenzend an die Greifelemente der Greifvorrichtung angeordnet sein, wobei der Klappmechanismus weitere Greifelemente umfasst. Der Kappmechanismus kann beispielsweise von einer ersten Position in eine zweite Position bewegbar sein. In der ersten Position des Klappmechanismus sind die weiteren Greifelemente deaktiviert. Das bedeutet, dass die weiteren Greifelemente in der ersten Position nicht dazu vorgesehen sind, ein Stückgut zu greifen bzw. zu manipulieren. In der zweiten Position sind die weiteren Greifelement aktiviert. Das bedeutet, dass die Greifelemente und die weiteren Greifelemente dazu vorgesehen sind, ein Stückgut zu greifen bzw. zu manipulieren. Alternativ oder zusätzlich können die Greifelemente ebenfalls an einem weiteren Klappmechanismus angeordnet werden, durch den die Greifelemente von einer ersten Position in eine zweite Position bewegbar sind.

Vorzugsweise ist die Greifvorrichtung dazu ausgestaltet, zumindest ein Stückgut mit einem Sauggreifer und/oder einem mechanischen Greifer zu greifen. Der mechanische Greifer kann beispielsweise ein Zangengreifer umfassen. Der Sauggreifer ist dazu geeignet, verschiedene Stückgüter mit unterschiedlichen Eigenschaften wie Größe, Form, Gewicht, Oberflächenbeschaffenheit etc. zu Greifen und von einer Ausgangsposition zu einer Endposition zu bewegen. Der Sauggreifer ist vorzugsweise in Betriebsrichtung nach dem Singulator angeordnet. Das Greifen kann durch einen Unterdruck erfolgen. Der Druckunterschied wird dadurch gebildet, dass ein Vakuum zwischen dem Sauggreifer und dem Stückgut gebildet wird. Genauer gesagt wird sobald der Sauggreifer die Oberfläche des Stückguts berührt und die Oberfläche gegenüber der Umgebung abgedichtet ist, ein Unterdruck erzeugt. Die Haltekraft ist abhängig von der Druckdifferenz zwischen Umgebungsdruck und dem Druck im Sauggreifer und von der Größe der Kontaktfläche zwischen dem Vakuum-Sauggreifer und dem Stückgut. Somit kann abhängig von zumindest einer Stückguteigenschaft des Stückguts ein passendes Greifelement gewählt werden. Als weitere Stückguteigenschaft kann in Abhängigkeit der Form des Stückguts ein Greifpunkt bzw. ein Ansaugpunkt vorgegeben sein.

Vorzugsweise weist die Handhabungsvorrichtung zumindest eine weitere Greifvorrichtung mit zumindest einem weiteren Greifelement auf, die in Abhängigkeit der Stückguteigenschaft des zu greifenden Stückguts aktiviert werden kann, um die Kontaktfläche zu vergrößern. Alternativ kann die weitere Greifvorrichtung dazu verwendet werden, zusätzliche Stückgüter zu handhaben. Beispielsweise kann die Handhabungsvorrichtung einen Vakuumsauggreifer und einen Zangengreifer umfassen, wobei der Vakuumsauggreifer und der Zangengreifer jeweils für Stückgüter mit verschiedenen Stückguteigenschaften vorgesehen sind.

Gemäß einem weiteren Aspekt der vorliegenden Erfindung wird ein Verfahren zum Aufnehmen von zumindest einem Stückgut bereitgestellt. Das Verfahren kann umfassen: Greifen zumindest eines Stückguts in einer Greifposition unter Verwendung einer Greifvorrichtung mit einer Kontaktfläche, mit der die Greifvorrichtung während der Greifposition mit dem zumindest einen zu greifenden Stückgut in Kontakt ist, wobei die Kontaktfläche basierend auf zumindest einer Stückguteigenschaft des zumindest einen zu greifenden Stückguts angepasst ist. Das Loslassen der Stückgüter kann nacheinander erfolgen. Alternativ können zumindest zwei Stückgüter mit einer kleinen Zwischenbewegung aufgenommen werden.

Anders gesagt kann das Verfahren zum Handhaben von zumindest einem Stückgut mit einer Handhabungsvorrichtung nach einem der vorhergehenden Ansprüche die Schritte umfassen: Erfassen oder Erlangen zumindest einer Stückguteigenschaft eines zu greifenden Stückguts; Anpassen einer Kontaktfläche einer Greifvorrichtung der Handhabungsvorrichtung basierend auf der Stückguteigenschaft; Greifen und Handhaben des Stückguts mit der Greifvorrichtung.

Die Saugvorrichtung wird beispielsweise mit mehreren Sauggreifern ausgestattet, die in Abhängigkeit vom zu greifenden Stückgut zueinander beweglich sind. Beispielsweise könnte ein Sauggreifer fest am Roboterarm angeordnet sein um kleinere Stückgüter zu picken. Weitere Sauggreifer können beispielsweise durch einen Schwenkmechanismus heruntergeklappt werden um Stückgüter mit verschiedenen Stückguteigenschaften, beispielsweise größere und/oder schwerere Stückgüter, zu greifen. Alternativ kann die Greifvorrichtung einen Wechselgreifer bzw. eine Wechselvorrichtung aufweisen, die von einer benachbarten Wechselstation den passenden Sauggreifer wählt. Weiterhin möglich ist ein Revolvermechanismus, der beispielsweise an einem Roboterarm der Handhabungsvorrichtung montiert ist und durch Rotation die passende Anzahl an Sauggreifern herunter dreht. Anstelle von unterschiedlich vielen Sauggreifern, kann auch nur die Größe oder Geometrie des verwendeten Sauggreifers verändert werden oder der Sauggreifer gegen eine andere Greifmechanik, beispielweise einen Zangengreifer, gewechselt werden.

Ein weiterer Aspekt der vorliegenden Erfindung betrifft die Verwendung einer Handhabungsvorrichtung nach einer der oben genannten Ausführungsformen in einem Sortiersystem.

Die Greifvorrichtung kann eine physische Mechanik, insbesondere einen beweglichen Greifer, umfassen. Die Greifvorrichtung kann linear beweglich, beispielsweise mittels einer Parallelogrammführung ausgebildet sein. Die Greifvorrichtung kann ferner einen Schwenkpunkt, beispielsweise am hinteren Ende des Greifers um 180° schwenkbar, ausgebildet sein. Die Ansteuerung der Greifvorrichtung kann in Abhängigkeit von einem Vision-System erfolgen. Ein einzelner Greifer kann so gezielt in Abhängigkeit von Schwerpunkt, Geometrie, Materialeigenschaft, Gewicht, beispielsweise von einer Waage erfasst, ausgewählt, gesteuert und/oder bewegt werden. Der einzelne Greifer kann während dem Transport des Stückguts heranfahren, sobald ein Verlustrisiko festgestellt wurde, beispielsweise durch Leckagedetektion, Gewichtsabweichung, Visioninformation. Wenn zumindest zwei geeignet zueinander liegende, beispielsweise kleinere Stückgüter, vom Vision-System erfasst werden, kann zumindest ein weiterer Greifer heruntergefahren werden, um dann beide Stückgüter mit einer Bewegung aufzunehmen und zusammen zu transportieren.

Einzelne Merkmale der dargestellten Ausführungsformen können dabei auch in anderen Ausführungsformen eingesetzt werden, sofern dies nicht ausdrücklich ausgeschlossen ist. Weiterbildungen und Vorteile, die in Zusammenhang mit der Vorrichtung genannt sind, gelten analog auch für das Verfahren und anders herum.

Weitere Vorteile und Merkmale der vorliegenden Erfindung ergeben sich aus der nachfolgenden Beschreibung mit Bezug auf die angegebenen Figuren. Dabei zeigen
- **Figur 1**: eine schematische Ansicht einer Ausführungsform einer erfindungsgemäßen Handhabungsvorrichtung;
- **Figur 2**: eine schematische Ansicht einer Ausführungsform einer erfindungsgemäßen Handhabungsvorrichtung;
- **Figur 3**: eine schematische Ansicht eines Verfahrens zur Verwendung einer Handhabungsvorrichtung.

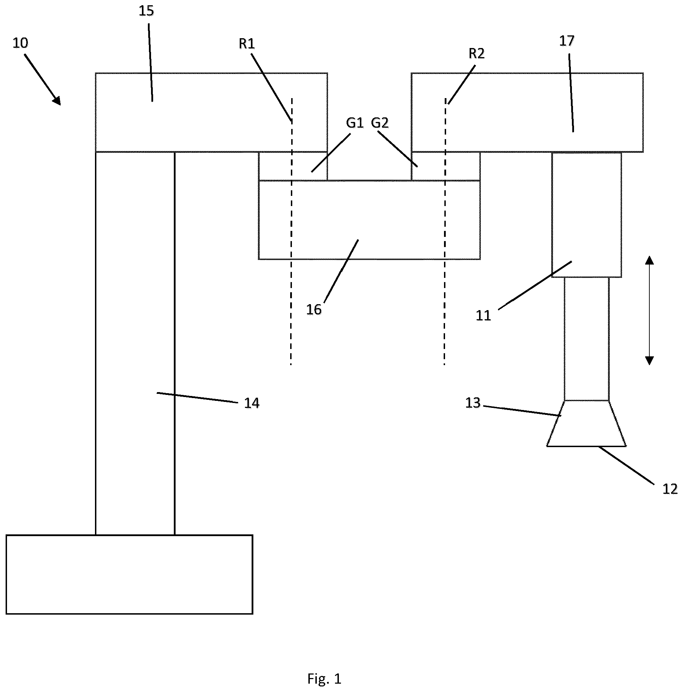

**Figur 1** zeigt eine schematische Ansicht einer Handhabungsvorrichtung 10. Die Handhabungsvorrichtung 10 weist ein Tragelement 14 und mehrere Schwenkelemente auf. Das Tragelement 14 ist unbeweglich bzw. fixiert. An einem axialen Ende des Tragelements 14 bzw. im Bereich eines axialen Endes des dem Tragelement 14 ist ein erstes Schwenkelement 15 angeordnet.

Die Handhabungsvorrichtung 10 weist ein erstes Rotationsgelenk G1 und ein zweites Rotationsgelenk G2 auf. Das erste Rotationsgelenk G1 ist an einem axialen Ende bzw. im Bereich eines axialen Endes des ersten Schwenkelements 15 angeordnet. Zwischen dem ersten Rotationsgelenk G1 und dem zweiten Rotationsgelenk G2 ist ein zweites Schwenkelement 16 angeordnet. Das zweite Schwenkelement 16 ist um eine erste Rotationsachse R1 des Rotationsgelenks R1 schwenkbar mit dem ersten Schwenkelement 15 verbunden.

Das zweite Rotationsgelenk G2 ist an dem dem ersten Schwenkelement 15 abgewandten axialen Ende des zweiten Schwenkelements 16 angeordnet bzw. ist im Bereich des dem ersten Schwenkelement 15 abgewandten axialen Ende des zweiten Schwenkelements 16 angeordnet. Das zweite Schwenkelement 16 ist über das zweite Rotationsgelenk G2 mit einem dritten Schwenkelement 17 verbunden. Das dritte Schwenkelement 17 ist um eine zweite Rotationsachse R2 des zweiten Rotationsgelenks G2 mit dem zweiten Schwenkelement 10 schwenkbar verbunden.

Das Tragelement 14 erstreckt sich im Wesentlichen parallel zu der ersten Rotationsachsen R1 und/oder zur zweiten Rotationsachse R2. Das erste Schwenkelement 15 erstreckt sich im Wesentlichen in eine Richtung senkrecht zur ersten Rotationsachse R1 und/oder zur zweiten Rotationsachse R2.

Im Bereich des neuen Endes des dritten Schwenkelements 17 ist eine Greifvorrichtung 11 angeordnet. Die vorliegende Greifvorrichtung 11 umfasst ein Greifelement 13. Die Greifvorrichtung 11 ist als ein Vakuum-Sauggreifer ausgebildet. Das Greifelement 13 ist als Saugelement, insbesondere als Saugnapf, ausgebildet. Alternativ sind andere Arten von Greifvorrichtungen 11, beispielsweise ein mechanischer Zangengreifer, denkbar. Die Handhabungsvorrichtung 10 kann zudem mehr als eine Greifvorrichtung 11 aufweisen. Es ist ferner eine Kombination verschiedener Typen von Greifvorrichtungen 11 möglich. Beispielsweise kann die Handhabungsvorrichtung 10 einen Vakuum-Sauggreifer und einen mechanischen Zangengreifer umfassen, die je nach Bedarf in Abhängigkeit der Stückguteigenschaften des zu greifenden Stückguts durch einen Mechanismus aktiviert oder deaktiviert bzw. ausgetauscht werden.

Die Greifvorrichtung 11 ist in eine vertikale Richtung linear beweglich. Die Bewegungsrichtung der Greifvorrichtung 11 ist durch den Doppelpfeil schematisch dargestellt. Dadurch kann das Greifelement 13 mit einem zu greifenden Stückgut in Kontakt gebracht werden. Beispielsweise kann die Greifvorrichtung 11 dazu einen Linearmotor bzw. ein Linear-Aktor umfassen. Es ist ferner möglich, dass die lineare Bewegung der Greifvorrichtung 11 hydraulisch oder pneumatisch aktiviert wird. Unter der vertikalen Richtung ist im Wesentlichen eine Richtung parallel zum Tragelement 14 zu verstehen. Im Betrieb kann die vertikale Richtung vorzugsweise parallel zur Schwerkraftrichtung verlaufen.

Das Greifelement 13 weist eine Kontaktfläche 12 auf. Die Kontaktfläche 12 des als Saugelement ausgebildeten Greifelements 13 ist kreisförmig bzw. umfasst eine kreis- oder ringförmige Geometrie. Alternativ sind andere Geometrien der Kontaktfläche 12, beispielsweise polygonale Geometrien, denkbar. Das Greifelement kann alternativ oder zusätzlich ein Zangenelement umfassen.

Das Greifelement 13 ist variabel gestaltet. Genauer gesagt ist die Kontaktfläche 12 des Greifelements 13 variabel. Die Kontaktfläche 12 des Greifelements 13 wird in Abhängigkeit zumindest einer Stückguteigenschaft des zu greifenden Stückguts angepasst. Das Anpassen der Kontaktfläche 12 kann beispielsweise durch Austauschen des Greifelements 13 erfolgen. Die Handhabungsvorrichtung 10 kann ein Magazin aufweisen, in dem mehrere verschiedene Greifelemente 13 angeordnet sind. Aus dem Magazin kann bei Bedarf in Abhängigkeit der Stückguteigenschaften eines zu greifenden Stückguts ein passendes Greifelement 13 gewählt und an der Greifvorrichtung 11 angeordnet bzw. montiert werden. Das Auswählen und Montieren kann automatisch durch einen Roboterarm erfolgen. Das Magazin 10 kann stationär ausgebildet sein. Alternativ oder zusätzlich kann das Magazin einen Revolvermechanismus umfassen. Dadurch kann durch eine Drehung um eine Drehachse die Greifelemente der Greifvorrichtung 11 in Position gebracht und/oder gewechselt werden.

Die Greifvorrichtung 11 weist dazu ein Anschlusselement auf. Das Anschlusselement dient zum Befestigen der Greifelemente 13 an der Greifvorrichtung 11. Das Anschlusselement ist vorzugsweise derart ausgestaltet, dass die Greifelemente 13 lösbar mit der Greifvorrichtung verbunden werden können. Das Anschlusselement kann eine lösbare formschlüssige und/oder eine lösbare kraftschlüssige Verbindung für die Greifelemente 13 bereitstellen.

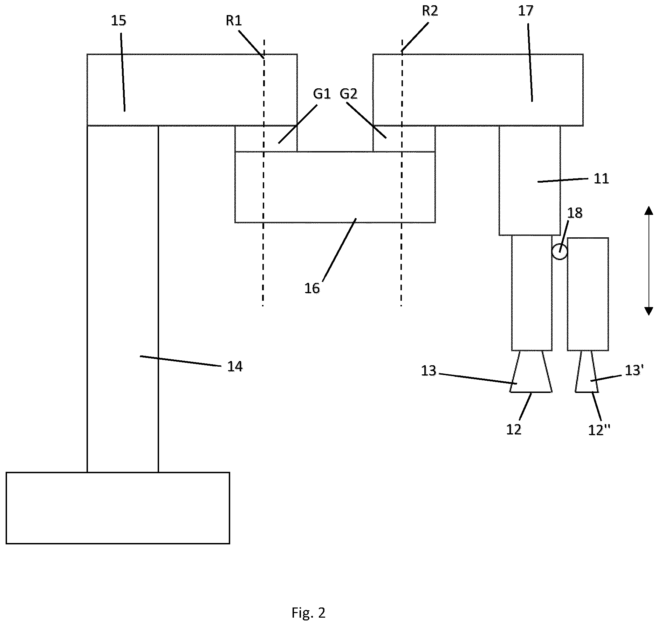

**Figur 2** zeigt eine weitere Ausführungsform Handhabungsvorrichtung 10. Die dargestellte Handhabungsvorrichtung 10 entspricht im Wesentlichen der in **Figur 1** dargestellten Handhabungsvorrichtung 10. Die in **Figur 2** dargestellte Handhabungsvorrichtung 10 unterscheidet sich dadurch, dass die Greifvorrichtung 11 einen Klappmechanismus 18 aufweist.

An dem Klappmechanismus 18 ist ein weiteres Greifelement 13' angeordnet. Das weitere Griffelement 13', das am Klappmechanismus 18 angeordnet ist, weist eine kleinere weitere Kontaktfläche 12' auf als das Greifelement 13. Das weitere Greifelement 13' kann durch Klappen in eine erste Position und in eine zweite Position überführt werden. In der ersten Position ist die weitere Greifvorrichtung 13' deaktiviert. Das bedeutet, dass die weitere Greifvorrichtung 13' mit keinem Stückgut in Kontakt kommen und das Stückgut greifen kann. In der zweiten Position ist die weitere Greifvorrichtung 13' derart angeordnet, um zusammen mit der Greifvorrichtung 13, ein Stückgut zu greifen. In der zweiten Position bildet sich die gesamte wirksame Kontaktfläche aus der Summe der Kontaktfläche 12 des Greifelements 13 und der weiteren Kontaktfläche 12' des weiteren Greifelements 13'. Bei Bedarf kann das weitere Greifelement 13' wieder durch Klappen in die erste Position überführt werden.

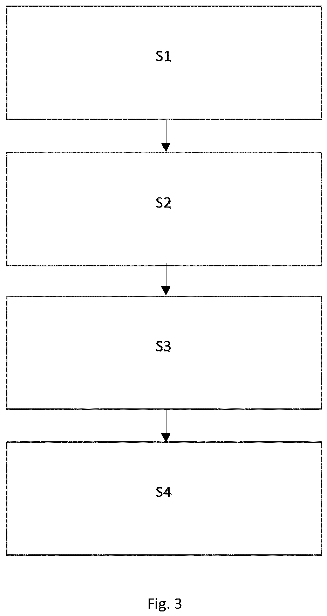

**Figur 3** zeigt ein schematisches Flussdiagramm eines Verfahrens zum Aufnehmen von zumindest einem Stückgut mit einer Handhabungsvorrichtung 10.

Das Verfahren umfasst das Greifen von zumindest eines Stückguts in einer Greifposition unter Verwendung einer Greifvorrichtung 11 mit einer Kontaktfläche 12, mit der die Greifvorrichtung 11 während der Greifposition mit dem zumindest einen gegriffenen Stückgut in Kontakt ist, wobei die Kontaktfläche 12 basierend auf zumindest einer Stückguteigenschaft des zumindest einen zu greifenden Stückguts angepasst ist.

Ein erster Schritt S1 umfasst ein Erfassen oder Erlangen zumindest einer Stückguteigenschaft eines zu greifenden Stückguts. Anders gesagt, können die Stückguteigenschaften aus einer Datenbank abgerufen oder mittels Sensoren erfasst werden.

Ein zweiter Schritt S2 umfasst das Anpassen der Kontaktfläche 12 der Greifvorrichtung 11 der Handhabungsvorrichtung 10 basierend auf der erfassten bzw. erlangten Stückgutinformation. Beispielsweise kann die Kontaktfläche 12 für ein Stückgut mit einem im Verhältnis zu einem unmittelbar vorhergehenden Stückgut größeren Gewicht erweitert werden. Das kann durch Wechseln des Greifelements 13 oder durch Hinzunahme zumindest eines weiteren Greifelements 13 erfolgen.

Ein dritter Schritt umfasst das Greifen und Handhaben des Stückguts mit der Greifvorrichtung 11. Das bedeutet, dass das Stückgut durch die Handhabungsvorrichtung 10 bewegt wird. Beispielsweise kann das Stückgut aus einem Sendungsstrom heraussortiert werden. Das Stückgut kann von einem ersten Förderband auf ein zweites Förderband verlagert werden.

Andere Ausführungsformen der vorliegenden Erfindung sind möglich und können von Fachpersonen bei der Anwendung des beanspruchten Gegenstands aus dem Studium der Figuren, der Offenbarung und der beigefügten Ansprüche verstanden und ausgeführt werden. Insbesondere können die jeweiligen Teile/Funktionen des jeweiligen oben beschriebenen Ausführungsform auch miteinander kombiniert werden. Ferner können verschiedene Schritte des Verfahrens in einer anderen Reihenfolge ausgeführt werden, als hier offenbart. In den Ansprüchen schließt das Wort "umfassend" andere Elemente oder Schritte nicht aus und der unbestimmte Artikel "ein" oder "eine" schließt eine Mehrzahl nicht aus. Die bloße Tatsache, dass bestimmte Maßnahmen in voneinander abhängigen Ansprüchen genannt werden, bedeutet nicht, dass eine Kombination dieser Maßnahmen nicht vorteilhaft sein kann. Etwaige Bezugszeichen in den Ansprüchen sollten nicht als Einschränkung des Umfangs der Ansprüche ausgelegt werden.

### Bezugszeichenliste:

- G1: erstes Rotationsgelenk
- G2: zweites Rotationsgelenk
- R1: erste Rotationsachse
- R2: zweite Rotationsachse
- 10: Handhabungsvorrichtung
- 11: Greifvorrichtung
- 12: Kontaktfläche
- 12': weitere Kontaktfläche
- 13: Greifelement
- 13': weiteres Greifelement
- 14: Tragelement
- 15: erstes Schwenkelement
- 16: zweites Schwenkelement
- 17: drittes Schwenkelement
- 18: Klappmechanismus

## Patentansprüche

1. Handhabungsvorrichtung (10) zum Aufnehmen von zumindest einem Stückgut, umfassend:
zumindest eine Greifvorrichtung (11), die dazu ausgestaltet ist, in einer Greifposition ein Stückgut zu greifen,
wobei die Greifvorrichtung (11) eine Kontaktfläche (12) aufweist, mit der die Greifvorrichtung (11) während der Greifposition mit dem zumindest einen gegriffenen Stückgut in Kontakt ist,
wobei die Greifvorrichtung (11) dazu ausgestaltet ist, basierend auf zumindest einer Stückguteigenschaft des zumindest einen zu greifenden Stückguts die Kontaktfläche (12) zu variieren.

2. Handhabungsvorrichtung (10) gemäß Anspruch 1, wobei die Greifvorrichtung (11) dazu ausgestaltet ist, basierend auf zumindest einer Stückguteigenschaft des zumindest einen zu greifenden Stückguts die Kontaktfläche (12) in ihrer Größe und/oder Ausrichtung im Raum zu variieren.

3. Handhabungsvorrichtung (10) gemäß Anspruch 1 oder 2, wobei die Stückguteigenschaft eine Dimensionierung des zumindest einen Stückguts, eine Oberflächenbeschaffenheit des zumindest einen Stückguts, ein Gewicht des zumindest einen Stückguts, einen Massenschwerpunkt des zumindest einen Stückguts und/oder eine Platzierung des zumindest einen Stückguts relativ zu anderen Stückgütern umfasst.

4. Handhabungsvorrichtung (10) gemäß einem der vorhergehenden Ansprüche, wobei die Handhabungsvorrichtung (10) ein Vision-System aufweist, um die zumindest eine Stückguteigenschaft zu erfassen.

5. Handhabungsvorrichtung (10) gemäß einem der vorhergehenden Ansprüche, wobei die Greifvorrichtung (11) zumindest ein Anschlusselement aufweist, an das jeweils zumindest ein Greifelement (13) angebracht oder anbringbar ist, wobei das zumindest eine Greifelement (13) die Kontaktfläche (12) definiert.

6. Handhabungsvorrichtung (10) gemäß einem der vorhergehenden Ansprüche, wobei die Handhabungsvorrichtung (10) dazu ausgestaltet ist, die Greifvorrichtung (11) zu rotieren.

7. Handhabungsvorrichtung (10) gemäß einem der vorhergehenden Ansprüche, wobei die Greifvorrichtung (11) zumindest ein Greifelement (13), vorzugsweise eine Vielzahl von Greifelementen (13, 13'), aufweist.

8. Handhabungsvorrichtung (10) gemäß Anspruch 7, wobei die Greifelemente (13, 13') unterschiedlich ausgebildet sind, insbesondere eine unterschiedliche Geometrie aufweisen.

9. Handhabungsvorrichtung (10) gemäß Anspruch 7 oder 8, wobei die Greifelemente (13, 13') relativ zueinander verlagerbar sind.

10. Handhabungsvorrichtung (10) gemäß einem der Ansprüche 7 bis 9, wobei die Greifelemente (13, 13') unterschiedlich ausgebildet sind, insbesondere weisen die Greifelemente (13, 13') eine unterschiedliche Geometrie auf.

11. Handhabungsvorrichtung (10) gemäß einem der vorhergehenden Ansprüche, wobei die Greifvorrichtung (11) ein Magazin aufweist, in dem eine Vielzahl von Greifelementen (13, 13') vorgesehen ist, wobei die Greifvorrichtung (11) so ausgestaltet ist, dass unterschiedliche Greifelemente (13, 13') daran montierbar sind.

12. Handhabungsvorrichtung (10) gemäß einem der vorhergehenden Ansprüche, wobei die Greifvorrichtung (11) einen Wechselmechanismus aufweist, bei dem abhängig von der Position des Wechselmechanismus ein Greifelement (13) so positioniert ist, dass es mit einem zu greifenden Stückgut in Kontakt kommen kann.

13. Handhabungsvorrichtung (10) gemäß einem der vorhergehenden Ansprüche, wobei die Greifvorrichtung (11) dazu ausgestaltet ist, zumindest zwei Stückgüter in der Greifposition gleichzeitig zu greifen.

14. Handhabungsvorrichtung (10) gemäß einem der vorhergehenden Ansprüche, wobei die Kontaktfläche (12) ausschließlich durch ein einzelnes Greifelement definiert oder ist die Kontaktfläche (12) durch mehrere Greifelemente definiert.

15. Verfahren zum Aufnehmen von zumindest einem Stückgut, umfassend:
Greifen zumindest eines Stückguts in einer Greifposition unter Verwendung einer Greifvorrichtung (11) mit einer Kontaktfläche (12), mit der die Greifvorrichtung (11) während der Greifposition mit dem zumindest einen gegriffenen Stückgut in Kontakt ist,
wobei die Kontaktfläche (12) basierend auf zumindest einer Stückguteigenschaft des zumindest einen zu greifenden Stückguts angepasst ist.
